# FASCICULE DE BREVET EUROPEEN

(11) **EP 1 384 634 B1**
(45) Date de publication et mention de la délivrance du brevet: **28.09.2005**
(21) Numéro de dépôt: 03291815.3
(22) Date de dépôt: 22.07.2003
(51) Int. Cl.: B60R 25/04

(54) **Procédé de protection contre le vol des engins à moteur thermique équipés d'une alimentation électrique et système antivol**
Verfahren zum Schutz gegen den Diebstahl eines mit einer elektrischen Energieversorgungseinrichtung versehenen Fahrzeuges und Diebstahlsicherung
Method for protection against the theft of a combustion engine vehicle with a power supply and an antitheft system

(30) Priorité: 22.07.2002 FR 0209280
(43) Date de publication de la demande: 28.01.2004
(73) Titulaire: KLR SA, 61260 Ceton (FR)
(72) Inventeur: Arpin, Claude, Longuevil QC J4N 1N5 Quebec (CA); Aubeges, Philippe, 61260 Ceton (FR)
(74) Mandataire: de Roquemaurel, Bruno

(56) Documents cités:
- FR-A- 2 759 109
- FR-A- 2 768 676
- GB-A- 2 286 634
- US-A- 5 889 603
- US-A- 5 990 785

## Description

La présente invention concerne un système antivol pour engins à moteur thermique équipés d'une alimentation électrique.

Elle s'applique notamment, mais non exclusivement à la protection contre le vol des véhicules automobiles, et en particulier les motocycles et scooters. Elle s'applique plus généralement aux engins de chantier et de jardinage, aux générateurs électriques mobiles.

A l'heure actuelle, la plupart des systèmes antivol existants ne permettent pas d'empêcher le vol d'un véhicule lorsque l'utilisateur se trouve à proximité ou dans son véhicule.

Pour tenter d'apporter une solution à ce problème, on a proposé un système antivol mettant en oeuvre une liaison entre un émetteur porté par l'utilisateur et un récepteur installé dans le véhicule. Ainsi, le document EP 0 319 428 décrit un système antivol pour véhicule comportant un émetteur portable et un récepteur installé dans le véhicule, et conçu pour couper automatiquement le circuit d'allumage du moteur lorsque le récepteur ne reçoit plus le signal émis par l'émetteur portable. L'émetteur émet périodiquement un signal HF codé de faible puissance. Lorsque ce signal est reconnu par le récepteur, un moyen de commutation monté sur la liaison d'alimentation électrique du circuit d'allumage du moteur se ferme pour alimenter ce dernier et ainsi permettre le fonctionnement du moteur. Lorsque le récepteur ne reçoit plus le signal codé, le moyen de commutation est ouvert, ce qui stoppe le moteur.
Ce système comprend en outre une temporisation de manière à éviter une coupure du moteur en cas de perte momentanée de la liaison entre l'émetteur et le récepteur.
De cette manière, le véhicule s'arrête dès qu'il s'éloigne du porteur de l'émetteur.

Cependant, si la durée de la perte momentanée dépasse celle de la temporisation, le moteur du véhicule est arrêté.

Pour apporter une solution à ce problème, le document FR 2 811 188 prévoit un détecteur de présence qui lorsqu'il est activé verrouille la fermeture du circuit d'allumage, de sorte que la liaison entre l'émetteur et le récepteur n'est plus nécessaire pour assurer le fonctionnement du moteur. Le détecteur de présence est par exemple adapté pour détecter la présence ou l'absence de l'utilisateur lorsqu'il est assis sur le siège du conducteur du véhicule. En cas de vol ou d'agression, moteur en marche, le détecteur de présence est désactivé lorsque l'utilisateur se lève du siège, ce qui réactive le récepteur qui cherche alors à rétablir la liaison avec l'émetteur. Si l'utilisateur reste à proximité du véhicule pendant le vol, l'agresseur peut s'enfuir avec le véhicule. Le véhicule ne sera rendu inutilisable qu'à la suite d'un changement d'état du détecteur de présence.

Cette solution ne permet donc pas non plus de protéger efficacement un véhicule contre le vol lorsque l'utilisateur se trouve à proximité de son véhicule, car le changement d'état du détecteur peut se produire suffisamment longtemps après le vol pour permettre à l'agresseur de mettre le véhicule volé en lieu sûr.

En outre, dans le cas d'un véhicule, la coupure du moteur peut s'avérer dangereuse, car dans certains cas, elle désactive certains organes sensibles comme l'éclairage du véhicule dans le cas d'un scooter, ou les systèmes assistés de freinage et/ou de direction dans le cas d'une automobile. En outre, sur les véhicules à deux roues, cela risque d'entraîner une chute du véhicule, en particulier en virage.

Le document FR-A-2759109 montre un dispositif et un procédé selon le préambule des revendications 1 et 9.

La présente invention a pour but de supprimer ces inconvénients. Cet objectif est atteint par la prévision d'un procédé de protection contre le vol d'un engin à moteur thermique, consistant à permettre le fonctionnement du moteur tant que des moyens récepteurs d'un dispositif antivol installé dans l'engin reçoivent un signal d'identification prédéfini émis par un dispositif d'identification portable.

Selon l'invention, pendant le fonctionnement du moteur de l'engin, le régime du moteur de l'engin est analysé en permanence, et lorsqu'il reste inférieur à un seuil de ralenti prédéterminé pendant une durée prédéfinie, une phase d'interrogation est déclenchée, consistant à déclencher l'émission par le dispositif d'identification du signal d'identification, et si les moyens récepteur du dispositif antivol ne reçoivent pas le signal d'identification pendant la phase d'interrogation, le dispositif antivol déclenche une phase d'arrêt progressif du moteur.

Selon une particularité de l'invention, pendant la phase d'interrogation, des moyens émetteurs du dispositif antivol émettent périodiquement un signal d'interrogation à destination du dispositif d'identification portable, le dispositif d'identification répondant à ce signal d'interrogation en émettant un signal d'identification.

Avantageusement, les signaux d'interrogation et d'identification contiennent un code chiffré.

Selon une autre particularité de l'invention, le dispositif d'identification émet un signal d'identification uniquement lorsque des moyens de détection de mouvement détectent un mouvement du dispositif d'identification.

Selon encore une autre particularité de l'invention, ce procédé comprend une étape de réveil du dispositif d'identification déclenchée à la suite de la détection d'un signal d'interrogation.

Selon encore une autre particularité de l'invention, durant la phase d'arrêt du moteur, il comprend une étape de comparaison du régime du moteur à un seuil d'arrêt prédéterminé, l'arrêt progressif du moteur n'étant exécuté que lorsque le régime du moteur est inférieur au seuil d'arrêt.

Selon encore une autre particularité de l'invention, ce procédé comprend une étape de détermination du seuil de ralenti à partir d'un régime minimum calculé à partir de la mesure du régime du moteur pendant une durée prédéfinie.

Avantageusement, l'étape de détermination du seuil de ralenti est exécutée à chaque activation du dispositif antivol.

L'invention concerne également un système antivol comprenant un dispositif antivol installé dans un engin à moteur et un dispositif d'identification portable comportant des moyens d'émission d'un signal d'identification, le dispositif antivol comportant :
- des moyens de réception du signal d'identification,
- des moyens de commutation interposés dans un circuit de commande du moteur pour arrêter le fonctionnement du moteur, et
- des moyens de calcul pour commander les moyens de commutation de manière à arrêter progressivement le moteur lorsque les moyens de réception ne reçoivent pas de signal d'identification du dispositif d'identification.

Selon l'invention, le dispositif antivol comprend en outre des moyens pour analyser en permanence le régime du moteur, et déclencher l'émission d'un signal d'identification par le dispositif d'identification lorsque le régime du moteur est resté inférieur à un seuil de régime de ralenti prédéterminé, puis a dépassé le seuil de régime de ralenti.

Selon une particularité de l'invention, le dispositif d'identification comprend un détecteur de mouvement, et des moyens pour déclencher l'émission d'un signal d'identification uniquement lorsque le détecteur de mouvement détecte un mouvement du dispositif d'identification.

Selon une autre particularité de l'invention, le dispositif antivol comprend des moyens pour déterminer le seuil de régime de ralenti à partir de mesures du régime moteur.

Selon encore une autre particularité de l'invention, le dispositif antivol comprend des moyens d'émission d'un signal d'interrogation, le dispositif d'identification comprenant des moyens de détection d'un signal d'interrogation, des moyens de réception du signal d'interrogation et des moyens de contrôle de l'alimentation électrique des circuits du dispositif d'identification pour n'alimenter tous les circuits du dispositif d'identification qu'à la suite de la détection par les moyens de détection d'un signal d'interrogation.

Selon encore une autre particularité de l'invention, le dispositif antivol et le dispositif d'identification comprennent des moyens de chiffrement et de déchiffrement pour chiffrer et déchiffrer les informations transmises dans les signaux d'interrogation et d'identification.

Avantageusement, le dispositif antivol comprend des moyens de génération d'un nombre aléatoire.

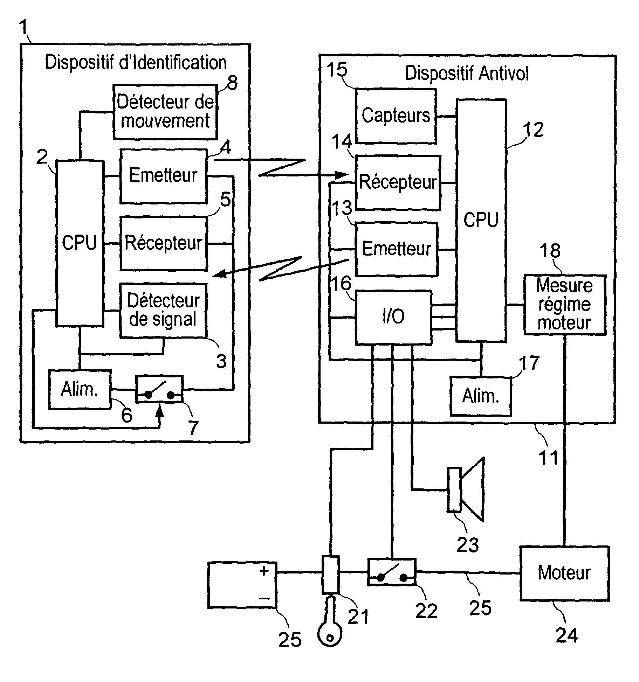

Un mode de réalisation préféré de l'invention sera décrit ci-après, à titre d'exemple non limitatif, avec référence au dessin annexé dans lequel l'unique figure représente schématiquement un système antivol selon l'invention.

Ce système antivol comprend un dispositif antivol 11 installé sur l'engin à moteur thermique 24 que l'on souhaite protéger contre le vol ou une utilisation non autorisée, et un dispositif d'identification 1 portable, porté par un utilisateur autorisé du véhicule, par exemple se présentant sous la forme d'un badge ou d'une carte à puce.

Le dispositif antivol 11 comprend une unité de traitement 12, par exemple du type microprocesseur ou microcontrôleur, un circuit de réception 14, un circuit d'émission 15, un circuit d'interface d'entrées/sorties 16 et des capteurs 15, 18 connectés à l'unité de traitement.
L'ensemble de ces circuits est alimenté par un circuit d'alimentation 17 relié à une source d'énergie, de préférence distincte de la batterie du véhicule.

Les circuits d'émission et de réception 13, 14 sont par exemple de type à modulation ASK (Amplitude Shift Keying) multi fréquences de 400 MHz à 900 MHz. On peut également utiliser des modulations de type FSK (Frequency shift keying) ou BPSK (Binary Phase Shift Keying). Le circuit de réception 14 est de préférence équipé d'un filtre de type acoustique.

Les capteurs 15, 18 comprennent un compteur 18 de régime moteur comprenant par exemple un circuit de mise en forme du signal émis par le circuit d'allumage 25 et un circuit de comptage d'impulsions dans le signal mis en forme. Si le véhicule est équipé d'un allumage électronique, il n'est pas nécessaire de mettre en forme le signal d'allumage avant de compter les impulsions.
Si l'engin protégé est un véhicule à deux roues, les capteurs 15 peuvent également comprendre un détecteur de chocs et/ou d'inclinaison omnidirectionnel.

Le circuit d'interface 16 est conçu pour connecter le dispositif antivol à un relais 22 de coupure du circuit d'allumage 25 du moteur 24 ou à une entrée de commande prévue à cet effet du système d'allumage électronique du véhicule. Il peut également être connecté au contact 21 du circuit d'allumage 25 du moteur pour détecter la présence ou l'absence de la clé de contact, ainsi qu'à une sirène 23, et éventuellement à un système de télésurveillance, ces derniers étant déclenchés lorsque le véhicule est détecté volé par le dispositif antivol 11.

Alternativement, le relais 22 peut également être monté sur le circuit d'alimentation électrique de la pompe à essence si le véhicule est équipé d'une telle pompe.

Le dispositif d'identification 1 comprend un circuit d'émission 4 et un circuit de réception 5, connectés à une unité de traitement 2, par exemple du type microprocesseur ou microcontrôleur. Il comprend également une source d'alimentation 6 autonome, par exemple du type pile ou batterie, qui alimente l'unité de traitement et les circuits d'émission et de réception 4, 5.

De préférence, le dispositif d'identification 1 comprend également un circuit de détection de signal 3, un détecteur de mouvements 8, par exemple du type accéléromètre ou détecteur de vibrations, et un dispositif de commutation 7 qui commande l'alimentation des circuits d'émission et de réception 4, 5. Par ailleurs, le dispositif d'identification 1 présente deux modes de fonctionnement, à savoir un mode de veille et un mode actif. Dans le mode de veille, seuls l'unité de traitement 2 et le circuit de détection 3 sont alimentés, et dans le mode actif, tous les circuits du dispositif d'identification sont alimentés.
L'unité de traitement 2 active le mode veille uniquement lorsque le détecteur de mouvements 8 émet un signal de détection, c'est-à-dire lorsque le dispositif d'identification est en mouvement ou soumis à des vibrations, et se met en attente d'un signal provenant du dispositif antivol 11 et détecté par le circuit de détection 3.
A l'inverse, lorsque le dispositif d'identification est totalement immobile, l'unité de traitement 2 coupe l'alimentation des circuits en commandant le dispositif de commutation 7, et se met en état de conservation d'énergie.

De cette manière, la consommation d'énergie électrique du dispositif d'identification 1 est réduite au minimum lorsque celui-ci n'est pas utilisé et ne communique pas avec le dispositif antivol 11.

Le circuit de détection de signal 3 est par exemple conçu pour détecter une enveloppe de signal modulé (ASK). A la différence du circuit de réception 5, il ne comporte pas d'étage de mise en forme de signal.

Le système antivol fonctionne de la manière suivante. Au démarrage du véhicule, dès que le circuit d'allumage 25 est mis sous tension (à l'aide de la clé de contact 21), le dispositif antivol 11 passe en mode de veille, dans lequel il tente d'établir une communication avec le dispositif d'identification 1 en émettant un code de sécurité, et mesure en permanence le régime du moteur 24 qu'il compare à un seuil prédéterminé, pour déterminer si le moteur est ou non au ralenti.

Si le dispositif d'identification 1 est à portée radio du dispositif antivol 11, il répond en envoyant un code d'identification. Si le dispositif d'identification renvoie un code d'identification valide, le dispositif antivol ne déclenche aucune action.
Par contre, si la liaison entre le dispositif antivol 11 et le dispositif d'identification n'est pas établie le dispositif antivol considère que le véhicule est volé.

Pendant l'utilisation du véhicule, le dispositif antivol 11 analyse en permanence le régime moteur et si celui-ci reste au inférieur à un seuil de ralenti au delà d'une durée prédéfinie, par exemple de 15 secondes, il déclenche une phase de surveillance pendant laquelle il attend tout d'abord que le régime moteur passe au dessus du seuil de régime de ralenti. Lorsque le seuil de régime de ralenti est dépassé, il interroge périodiquement pendant une certaine durée, par exemple toutes les 15 secondes, le dispositif d'identification 1 jusqu'à ce que ce dernier soit reconnu. Si la liaison avec le dispositif d'identification 1 est établie, il se met en mode de repos dans lequel il n'émet aucun signal vers le dispositif d'identification 1. Par contre, si la liaison ne peut pas être établie, il considère que le véhicule est volé et déclenche une phase d'arrêt du moteur.

Le dispositif antivol déclenche alors l'arrêt progressif du moteur en commandant envoyant sur le relais 22 des impulsions de coupure de plus en plus larges jusqu'à obtenir l'arrêt du moteur 24. Par mesure de sécurité, cette phase d'arrêt peut n'être déclenchée que lorsque le régime du moteur 24 est inférieur à un certain seuil d'arrêt prédéterminé.

Grâce à ces dispositions, le dispositif d'identification n'est actif que pendant de très brèves périodes ce qui augmente considérablement son autonomie.

Le signal appliqué au relais présente par exemple un rapport cyclique constant et une fréquence de plus en plus petite, allant de 2 à 3 kHz à moins d'un Hz. Le dispositif antivol peut également déclencher la sirène d'alarme 23.

Le dispositif antivol 11 maintient ensuite le circuit d'allumage 25 du moteur 24 coupé tant que la liaison avec le dispositif d'identification 1 n'est pas rétablie, et il cherche à rétablir cette liaison tant que le contact 22 d'allumage est sous tension.

Lorsque le circuit d'allumage 25 du moteur 24 est hors tension (absence de la clé de contact, le dispositif antivol se met en mode de garde dans lequel il passe en mode de consommation d'énergie minimum et active tous les organes de sécurité de manière à déclencher une alarme si un capteur 15 est activé.

On peut également prévoir une télécommande pour faire passer manuellement à l'aide de la télécommande le dispositif antivol du mode de veille au mode de garde et réciproquement.

Le processus d'identification entre le dispositif antivol et le dispositif d'identification est effectué de préférence en utilisant des clés chiffrement asymétriques, de manière à éviter toute tentative pour tromper le dispositif antivol. A cet effet, le dispositif antivol génère un nombre aléatoire qu'il chiffre à l'aide de la clé publique du dispositif d'identification qu'il possède en mémoire, et émet ce nombre chiffré dans un message d'interrogation. Une fois activé, le dispositif d'identification 1 qui reçoit le message d'interrogation, déchiffre le nombre chiffré contenu dans le message reçu à l'aide de sa clé privée, puis chiffre ce nombre à l'aide de la clé publique du dispositif antivol qu'il possède en mémoire et émet le nombre chiffré dans un message de réponse. Lorsque le dispositif antivol reçoit le message de réponse, il déchiffre le nombre chiffré contenu dans le message reçu à l'aide de sa clé privée, et compare ce nombre déchiffré avec le nombre aléatoire qu'il a émis dans son message d'interrogation.
Si ces deux nombres sont identiques, le dispositif antivol considère qu'il a reconnu le dispositif d'identification. De cette manière, seul le dispositif d'identification correspondant au dispositif antivol peut répondre correctement aux messages d'interrogation émis par ce dernier.

Les différents seuils prédéterminés de régime moteur utilisés peuvent être réglés lors de l'installation du dispositif antivol sur le véhicule ou déterminés automatiquement au cours d'une phase d'apprentissage déclenchée à la suite de l'installation du dispositif antivol sur le véhicule, à partir du régime minimum du moteur qui est déterminé en mesurant le régime du moteur pendant une durée prédéfinie.
Avantageusement, cette phase d'apprentissage peut être déclenchée à chaque mise en service du dispositif antivol, de manière à adapter ce seuil au régime de ralenti du moteur qui peut varier suivant les saisons.

## Revendications

1. Procédé de protection contre le vol d'un engin à moteur thermique, consistant à permettre le fonctionnement du moteur tant que des moyens récepteurs (14) d'un dispositif antivol (11) installé dans l'engin reçoivent un signal d'identification prédéfini émis par un dispositif d'identification portable (1),
**caractérisé en ce que** pendant le fonctionnement du moteur de l'engin, le régime du moteur de l'engin est analysé en permanence, et lorsqu'il reste inférieur à un seuil de ralenti prédéterminé pendant une durée prédéfinie, une phase d'interrogation est déclenchée, consistant à déclencher l'émission par le dispositif d'identification du signal d'identification, et si les moyens récepteur du dispositif antivol ne reçoivent pas le signal d'identification pendant la phase d'interrogation, le dispositif antivol déclenche une phase d'arrêt progressif du moteur.

2. Procédé selon la revendication 1,
**caractérisé en ce que** pendant la phase d'interrogation, des moyens émetteurs (13) du dispositif antivol (11) émettent périodiquement un signal d'interrogation à destination du dispositif d'identification portable (1), et **en ce que** le dispositif d'identification répond à ce signal d'interrogation en émettant un signal d'identification.

3. Procédé selon la revendication 2,
**caractérisé en ce que** les signaux d'interrogation et d'identification contiennent un code chiffré.

4. Procédé selon la revendication 2 ou 3,
**caractérisé en ce que** le dispositif d'identification (1) émet un signal d'identification uniquement lorsque des moyens de détection de mouvement (8) détectent un mouvement du dispositif d'identification.

5. Procédé selon l'une des revendications 1 à 4,
**caractérisé en ce qu'**il comprend une étape de réveil du dispositif d'identification (11) déclenchée à la suite de la détection d'un signal d'interrogation.

6. Procédé selon l'une des revendications 1 à 5,
**caractérisé en ce que** durant la phase d'arrêt du moteur, il comprend une étape de comparaison du régime du moteur à un seuil d'arrêt prédéterminé, l'arrêt progressif du moteur n'étant exécuté que lorsque le régime du moteur est inférieur au seuil d'arrêt.

7. Procédé selon la revendication 6,
**caractérisé en ce qu'**il comprend une étape de détermination du seuil de ralenti à partir d'un régime minimum calculé à partir de la mesure du régime du moteur pendant une durée prédéfinie.

8. Procédé selon la revendication 7,
**caractérisé en ce que** l'étape de détermination du seuil de régime de ralenti est exécutée à chaque activation du dispositif antivol (11).

9. Système antivol comprenant un dispositif antivol (11) installé dans un engin à moteur et un dispositif d'identification portable (1) comportant des moyens d'émission (4) d'un signal d'identification, le dispositif antivol comportant :
- des moyens de réception (14) du signal d'identification,
- des moyens de commutation (22) interposés dans un circuit de commande du moteur pour arrêter le fonctionnement du moteur, et
- des moyens de calcul (12) pour commander les moyens de commutation de manière à arrêter progressivement le moteur lorsque les moyens de réception ne reçoivent pas de signal d'identification du dispositif d'identification (1),
**caractérisé en ce que** le dispositif antivol comprend en outre des moyens pour analyser en permanence le régime du moteur, et déclencher l'émission d'un signal d'identification par le dispositif d'identification lorsque le régime du moteur est resté inférieur à un seuil de régime de ralenti prédéterminé, puis a dépassé le seuil de régime de ralenti.

10. Système antivol selon la revendication 9,
**caractérisé en ce que** le dispositif d'identification (1) comprend un détecteur de mouvement (8), et des moyens pour déclencher l'émission d'un signal d'identification uniquement lorsque le détecteur de mouvement (8) détecte un mouvement du dispositif d'identification.

11. Système antivol selon la revendication 9 ou 10,
**caractérisé en ce que** le dispositif antivol (11) comprend des moyens (12) pour déterminer le seuil à partir de mesures du régime moteur.

12. Système antivol selon l'une des revendications 9 à 11,
**caractérisé en ce que** le dispositif antivol (11) comprend des moyens d'émission (13) d'un signal d'interrogation, et **en ce que** le dispositif d'identification (1) comprend des moyens de détection (3) d'un signal d'interrogation, des moyens de réception (5) du signal d'interrogation et des moyens de contrôle (7) de l'alimentation électrique des circuits du dispositif d'identification pour n'alimenter tous les circuits du dispositif d'identification qu'à la suite de la détection par les moyens de détection d'un signal d'interrogation.

13. Système antivol selon la revendication 12,
**caractérisé en ce que** le dispositif antivol (11) et le dispositif d'identification (1) comprennent des moyens (12, 2) de chiffrement et de déchiffrement pour chiffrer et déchiffrer les informations transmises dans les signaux d'interrogation et d'identification.

14. Système antivol selon la revendication 13,
**caractérisé en ce que** le dispositif antivol (11) comprend des moyens (12) de génération d'un nombre aléatoire.

## Patentansprüche

1. Verfahren zum Schutz gegen den Diebstahl eines Fahrzeugs mit Verbrennungsmotor, um den Betrieb eines Motors solange zu ermöglichen wie Empfangsmittel (14) einer Diebstahlsicherungsvorrichtung (11), die im Fahrzeug installiert ist, ein vorbestimmtes Erkennungssignal, das von einer tragbaren Erkennungsvorrichtung (1) ausgesendet wird, empfangen, **dadurch gekennzeichnet, dass** während des Betriebs des Fahrzeugmotors ständig der Zustand des Fahrzeugmotors analysiert wird und wenn er während einer vorbestimmten Dauer unter einer vorherbestimmten Verlangsamungsschwelle bleibt, wird eine Abfragephase ausgelöst, die darin besteht, die Aussendung des Erkennungssignals durch die Erkennungsvorrichtung auszulösen, und wenn die Empfangsmittel der Diebstahlsicherungsvorrichtung kein Erkennungssignal während der Abfragephase empfangen, löst die Diebstahlsicherungsvorrichtung eine schrittweise Anhaltephase des Motors aus.

2. Verfahren nach Anspruch 1, **dadurch gekennzeichnet, dass** während der Abfragephase die Sendemittel (13) der Diebstahlsicherungsvorrichtung (11) periodisch ein Abfragesignal an das Ziel der tragbaren Erkennungsvorrichtung (1) aussenden, und dass die Erkennungsvorrichtung auf dieses Abfragesignal antwortet indem sie ein Erkennungssignal aussendet.

3. Verfahren nach Anspruch 2, **dadurch gekennzeichnet, dass** die Abfrage- und Erkennungssignale einen verschlüsselten Kode enthalten.

4. Verfahren nach Anspruch 2 oder 3, **dadurch gekennzeichnet, dass** die Erkennungsvorrichtung (1) nur ein Erkennungssignal aussendet, wenn Bewegungserkennungsmittel (8) eine Bewegung der Erkennungsvorrichtung erkennen.

5. Verfahren nach einem der Ansprüche 1 bis 4, **dadurch gekennzeichnet, dass** es eine Weckphase der Erkennungsvorrichtung (1) umfasst, die nach der Erkennung eines Abfragesignals ausgelöst wird.

6. Verfahren nach einem der Ansprüche 1 bis 5, **dadurch gekennzeichnet, dass** es während der Anhaltephase des Motors eine Vergleichsphase des Zustands des Motors mit einer vorherbestimmten Anhalteschwelle umfasst und das schrittweise Anhalten des Motors nur ausgeführt wird, wenn der Zustand des Motors unter der Anhalteschwelle liegt.

7. Verfahren nach Anspruch 6, **dadurch gekennzeichnet, dass** es eine Bestimmungsphase der Verlangsamungsschwelle von einem Mindestzustand an umfasst, der von der Messung des Motorenzustands an während einer vorbestimmten Dauer berechnet wird.

8. Verfahren nach Anspruch 7, **dadurch gekennzeichnet, dass** die Bestimmungsphase der Schwelle des Verlangsamungszustands bei jeder Aktivierung der Diebstahlsicherungsvorrichtung (11) ausgeführt wird.

9. Diebstahlsicherungssystem umfassend eine Diebstahlsicherungsvorrichtung (11), die in einem Kraftfahrzeug installiert ist, und eine tragbare Erkennungsvorrichtung (1), die Sendemittel (4) für ein Erkennungssignal enthält, wobei die Diebstahlsicherungsvorrichtung umfasst:
- Empfangsmittel (14) für das Erkennungssignal,
- Schaltmittel (22), die in einem Steuerkreis des Motors zwischengeschalten sind, um den Betrieb des Motors anzuhalten, und
- Berechnungsmittel (12), um die Schaltmittel so zu steuern, dass sie den Motor schrittweise anhalten, wenn die Empfangsmittel kein Erkennungssignal der Erkennungsvorrichtung (1) empfangen, **dadurch gekennzeichnet, dass** die Diebstahlsicherungsvorrichtung darüber hinaus Mittel umfasst, um ständig den Zustand des Motors zu analysieren und die Aussendung eines Erkennungssignals durch die Erkennungsvorrichtung auszulösen, wenn der Zustand des Motors unter einer vorherbestimmten Schwelle des Verlangsamungszustandes geblieben ist, und dann die Schwelle des Verlangsamungszustandes überschritten hat.

10. Diebstahlsicherungssystem nach Anspruch 9, **dadurch gekennzeichnet, dass** die Erkennungsvorrichtung (1) Bewegungserkennungsmittel (8) umfasst und Mittel, um die Aussendung des Erkennungssignals nur auszulösen, wenn die Bewegungserkennungsmittel (8) eine Bewegung der Erkennungsvorrichtung erkennen.

11. Diebstahlsicherungssystem nach Anspruch 9 oder 10, **dadurch gekennzeichnet, dass** die Diebstahlsicherungsvorrichtung (11) Mittel (12) umfasst, um die Schwelle von der Messung des Motorenzustands an zu bestimmen.

12. Diebstahlsicherungssystem nach einem der Ansprüche 9 bis 11, **dadurch gekennzeichnet, dass** die Diebstahlsicherungsvorrichtung (11) Sendemittel (13) für ein Abfragesignal umfasst und dass die Erkennungsvorrichtung (1) Erkennungsmittel (3) für ein Abfragesignal, Empfangsmittel (5) für das Abfragesignal und Steuermittel (7) für die elektrische Energieversorgungseinrichtung des Schaltkreises der Erkennungsvorrichtung umfasst, um alle Schaltkreise der Erkennungsvorrichtung nur nach der Erkennung durch die Erkennungsmittel für ein Abfragesignal zu versorgen.

13. Diebstahlsicherungssystem nach Anspruch 12, **dadurch gekennzeichnet, dass** die Diebstahlsicherungsvorrichtung (11) und die Erkennungsvorrichtung (1) Mittel (12, 2) zur Verschlüsselung und Entschlüsselung umfassen, um die in den Abfrage- und Erkennungssignalen übertragenen Informationen zu verschlüsseln und zu entschlüsseln.

14. Diebstahlsicherungssystem nach Anspruch 13, **dadurch gekennzeichnet, dass** die Diebstahlsicherungsvorrichtung (11) Mittel (12) zur Erzeugung einer zufallsbedingten Anzahl umfasst.

## Claims

1. Method of protecting machinery with a thermal engine against theft, consisting of allowing the functioning of the engine as long as reception means (14) of an anti-theft device (11) installed in the machinery are receiving a predefined identification signal emitted by the portable identification device (1),
**characterised in that**, during the functioning of the engine of the machinery, the speed of the engine of the machinery is analysed continuously and, when it remains below a predetermined tickover threshold for a predefined period, an interrogation phase is triggered, consisting of triggering the emission of the identification signal by the identification device and, if the reception means of the anti-theft device do not receive the identification signal during the interrogation phase, the anti-theft device triggers a progressive stoppage phase of the engine.

2. Method according to claim 1, **characterised in that**, during the interrogation phase, emitting means (13) of the anti-theft device (11) periodically emit an interrogation signal intended for the portable identification device (1), and **in that** the identification device responds to this interrogation signal by emitting an identification signal.

3. Method according to claim 2, **characterised in that** the interrogation and identification signals contain an enciphered code.

4. Method according to claim 2 or 3, **characterised in that** the identification device (1) emits an identification signal only when movement detection means (8) detect a movement of the identification device.

5. Method according to one of claims 1 to 4, **characterised in that** it comprises a step of waking up the identification device (11) triggered following the detection of an interrogation signal.

6. Method according one of claims 1 to 5, **characterised in that**, during the engine stoppage phase, it comprises a step of comparing the speed of the engine with a predetermined stoppage threshold, the progressive stoppage of the engine being executed when the speed of the engine is below a stoppage threshold.

7. Method according to claim 6, **characterised in that** it comprises a step of determining the tick-over threshold from a minimum speed calculated from the measurement of the speed of the engine during a predefined period.

8. Method according to claim 7, **characterised in that** the step of determining the tick-over speed threshold is executed at each activation of the anti-theft device (11).

9. Anti-theft system comprising an anti-theft device (11) installed in machinery with an engine and a portable identification device (1) comprising means (4) of emitting an identification signal, the anti-theft device comprising:
- means (14) of receiving the identification signal,
- switching means (22) interposed in a control circuit of the engine in order to stop the functioning of the engine, and
- calculation means (12) for controlling the switching means so as to stop the engine progressively when the reception means are not receiving an identification signal from the identification device (1),
**characterised in that** the anti-theft device also comprises means for continuously analysing the engine speed and triggering the emission of an identification signal by the identification device when the speed of the engine has remained below a predetermined tick-over speed threshold and has then exceeded the tick-over speed threshold.

10. Anti-theft system according to claim 9, **characterised in that** the identification device (1) comprises a movement detector (8), and means for triggering the emission of an identification signal only when the movement detector (8) detects a movement of the identification device.

11. Anti-theft system according to claim 9 or 10, **characterised in that** the anti-theft device (11) comprises means (12) for determining the threshold from measurement of the engine speed.

12. Anti-theft system according to one of claims 9 to 11, **characterised in that** the anti-theft device (11) comprises means (13) of emitting an interrogation signal, and **in that** the identification device (1) comprises means (3) of detecting an interrogation signal, means (5) of receiving the interrogation signal and means (7) of controlling the electrical supply to the circuits of the identification device in order to supply all the circuits of the identification device only following the detection of an interrogation signal by the detection means.

13. Anti-theft system according to claim 12, **characterised in that** the anti-theft device (11) and the identification device (1) comprise enciphering and deciphering means (12, 2) for enciphering and deciphering the information transmitted in the interrogation and identification signals.

14. Anti-theft system according to claim 13, **characterised in that** the anti-theft device (11) comprises means (12) of generating a random number.
